(19) Europäisches Patentamt
European Patent Office
Office européen des brevets

(11) Publication number: **0 000 097**
**B1**

(12) # EUROPEAN PATENT SPECIFICATION

(45) Date of publication of patent specification: **11.02.81**

(51) Int. Cl.³: **C 08 L 67/02**, C 08 G 63/18

(21) Application number: **78300028.4**

(22) Date of filing: **09.06.78**

(54) **Polyarylene esters moulding compositions, process for their preparation and shaped articles therefrom.**

(30) Priority: **13.06.77 US 806388**

(43) Date of publication of application:
**20.12.78 (Bulletin 78/01)**

(45) Publication of the grant of the patent:
**11.02.81 Bulletin 81/06**

(84) Designated contracting states:
**BE DE FR GB NL**

(56) References cited:
**BE - A - 850 978**
**US - A - 3 511 809**
**CHEMICAL ABSTRACTS,**
**Vol. 81, nº 12, 23 September 1974**
**Columbus, Ohio, U.S.A.**
**OKAMOTO TAKASHI et al.: « Glass Fiber-Reinforced Aromatic Polyesters » blz. 55 abstract 64710m.**

(73) Proprietor: **MONSANTO COMPANY**
**Patent Department 800 North Lindbergh Boulevard**
**St. Louis, Missouri 63166 (US)**

(72) Inventor: **Deex, Oliver DeSauze**
**412 Oakley Drive**
**Clayton, Missouri 63105 (US)**
Inventor: **Weiss, Virgil Wayne**
**8911 Scenic Hills Drive**
**Pensacola, Florida 32504 (US)**

(74) Representative: **Pearson, John Lionel**
**Monsanto House 10-18 Victoria Street**
**London, SW1H ONQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Imprimerie Jouve, 17, rue du Louvre, 75001 Paris, France

EP 0 000 097 B1

# Polyarylene esters moulding compositions, process for their preparation and shaped articles therefrom

This invention relates to a molding resin, to a method of producing the molding resin and to shaped articles formed from the molding resin. More particularly, it pertains to molding resins comprising a polyarylene ester and a reinforcing filler, to a method of producing such molding resins and to shaped articles formed from such molding resins.

Many polyesters have been suggested for use as molding resins and engineering thermoplastics since the earliest practical development of such polymers by Whinfield and Dickson. Although several of such polyesters and copolyesters have found commercial success as film and fiber products, few have been successful as molding resins and engineering thermoplastics. Two of the more successful, polyethylene terephthalate and polytetramethylene terephthalate prepared from aliphatic diols and terephthalic acid, suffer from certain deficiencies as engineering thermoplastics. They are both quite flammable and have rather low glass transition temperatures which can limit their usefulness to relatively low temperatures.

The present invention discloses improved molding resins that yield molded articles possessing a) improved fire safety performance, particularly reduced afterglow, b) improved resistance to heat distortion and c) improved resistance to flow at elevated temperatures in comparison with reinforced polyalkylene terephthalates. According to the present invention there is provided a molding resin comprising an intimate blend of a polyarylene ester and a reinforcing filler, characterised in that the polyarylene ester consists essentially of units derived from a $C_8$ to $C_{25}$ aromatic dicarboxylic acid and optionally a minor quantity of a $C_2$ to $C_{20}$ aliphatic dicarboxylic acid and a diphenol comprising from 60 to 100 mol percent 1,2-bis-(4-hydroxyphenyl) ethane and from 40 to 0 mol percent of a $C_6$ to $C_{25}$ diphenol, the inherent viscosity of said polyarylene ester at 30 °C being at least 0.5 as determined at a concentration of 0.5 grams polyester per 100 ml solution in a solvent mixture of 60 parts by weight of phenol and 40 parts by weight of sym-tetrachloroethane. The present invention also provides a process of producing a molding resin comprising the intimate blending of the polyarylene ester with the reinforcing filler and the shaped articles molded from these molding resins.

The molding resins of the present invention comprise an intimate blend of a polyarylene ester and a reinforcing filler preferably ranging from 2 to 60 weight percent of the total composition. Such polyarylene esters consist essentially of units derived from at least one $C_8$ to $C_{25}$ aromatic dicarboxylic acid and a diphenol comprising from 60 to 100 mol percent 1,2-bis-(4-hydroxyphenyl) ethane and from 40 to 0 mol percent of at least one $C_6$ to $C_{25}$ diphenol.

The polyarylene ester component of the molding resin of the present invention is the condensation product of at least one $C_8$ to $C_{25}$ aromatic dicarboxylic acid and a diphenol comprising from 60 to 100 mol percent 1,2-bis(4-hydroxyphenyl) ethane and from 40 to 0 mol percent of at least one $C_6$ to $C_{25}$ diphenol. The polyesters are described in Belgian Patent 850,978 and have been found to possess superior fire safety performance and are capable of yielding crystalline compositions which have superior solvent resistance and stress cracking resistance.

While essentially any suitable $C_8$ to $C_{25}$ aromatic dicarboxylic acid, which is an acid having both carboxyl groups directly attached to an aromatic ring, and admixture thereof can be used in the preparation of the polyarylene esters, the preferred aromatic dicarboxylic acids comprise at least one of isophthalic acid, terephthalic acid, 3,3'-, 3,4'- and 4,4'-bibenzoic acids and bis(carboxyphenyl) ethers, bis(carboxyphenyl) sulfides, bis(carboxyphenyl) sulfones, bis(carboxyphenyl) methanes, 1,2-bis(carboxyphenyl) ethanes and 2,2-bis(carboxyphenyl) propanes in which the carboxy groups are in the 3 or 4 positions. Mixtures of one or more of the aromatic dicarboxylic diacids with minor quantities, generally less than 25 mol percent, of $C_2$ to $C_{20}$ aliphatic dicarboxylic acids can also be used. The quantities of aliphatic dicarboxylic acids in general are selected so that they do not cause a significant loss in Tg of the resulting polyesters. Preferably the quantity is limited to a loss in Tg of not more than 10 °C. The acid or admixture of acids is combined with 1,2-bis(4-hydroxyphenyl) ethane or with 1,2-bis(4-hydroxyphenyl) ethane in admixture with any other suitable $C_6$ to $C_{25}$ diphenol or mixture of diphenols to provide the aromatic polyesters of the present invention. Representative diphenols comprise at least one of resorcinol, hydroquinone, 3,3'-, 3,4'- and 4,4'-diphenols, or diphenols represented by the formula:

(I) 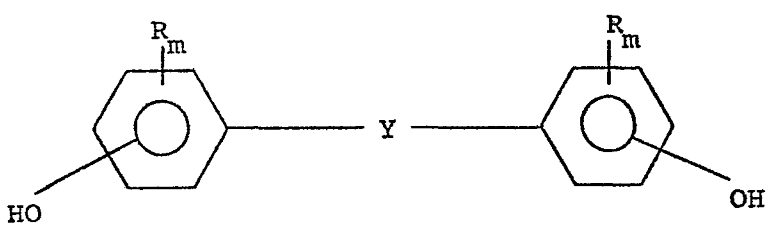

wherein the hydroxyl groups are in the 3 or 4 positions, Y is O, S, $SO_2$, C = O, $CH_2$, $CH(CH_3)$, $C(CH_3)_2$, $(CH_2)_2$ or $(CH_2)_3$ and R is a $C_1$ to $C_4$ alkyl radical and m = 0 to 4. Examples of diphenols according to formula I include bis(4-hydroxyphenyl) methane, 1,2-bis(3-hydroxyphenyl) ethane, 1-(3-hydroxyphenyl)-2-(4-hydroxyphenyl) ethane, 2,2-bis(4-hydroxyphenyl) propane, bis(4-hydroxyphenyl) ether, bis(4-hydroxyphenyl) sulfide and bis(4-hydroxyphenyl) sulfone.

While the diphenol must contain at least 60 mol percent 1,2-bis(4-hydroxyphenyl) ethane, it is preferred to use a diphenol which comprises at least 90 mol percent, 1,2-bis(4-hydroxyphenyl) ethane because these polyesters are generally crystalline and exhibit a rather rapid rate of crystallization and polyarylene esters in which 1,2-bis(4-hydroxyphenyl) ethane is substantially the only diphenolic component can be used to advantage to obtain more rapid rates of crystallization.

The inherent viscosity of the polyesters determined at 30 °C and in a solvent combination of 60 parts by weight phenol and 40 parts by weight sym-tetrachloroethane at a concentration of 0.5 g per dl, is at least 0.5 and is preferably at least 0.7. The selection of acid and diphenol components is made so that the polyester preferably has a glass transition temperature of at least 100 °C and a melt viscosity at 350 °C determined in a capillary rheometer at a shear rate of 110 $sec^{-1}$ of less than $10^5$ poise. For crystalline polyesters prepared by condensation of aromatic diacid and diphenol comprising at least 90 mol percent 1,2-bis(4-hydroxyphenyl) ethane, the aromatic dicarboxylic acid is preferably selected so that the melting point of the polyarylene ester is less than 350 °C. A preferred group of the polyarylene esters comprises those polyesters obtained by condensation of a diphenol comprising at least 90 mol percent 1,2-bis(4-hydroxyphenyl) ethane and a dicarboxylic acid comprising at least 67 mol percent isophthalic acid. Of this group, one of the preferred combinations is obtained from 1,2-bis(4-hydroxyphenyl) ethane and isophthalic acid without additional components. Such preferences are based on the availability and cost of the acid as well as on the desirable glass transition and melting points of the resulting polyesters.

Since molding cycles are preferably rapid, it is desirable that a crystalline polyester crystallize in the short period during which the polymer is cooling in the mold. Thus a molding material for uses where high temperature dimensional stability is important, needs to have a rapid rate of crystallization. The glass transition temperature, the melting point and the rate of crystallization can be determined by means of differential scanning calorimetry as described in Belgian Patent 850,978.

The crystallization rate is expressed as the inverse of the time required for one half of the crystallization exotherm observed when a sample is cooled at a rate of 20 °C per minute. A rate of crystallization of about 0.2 $minutes^{-1}$ or greater as determined by this method is satisfactory in injection molding of polymers because the cooling rate in the molding operation is generally much faster than the cooling rate used in the determination of rate of crystallization. However, a crystallization rate of about 0.5 $minutes^{-1}$ or greater is more preferable and for rapid molding cycles a crystallization rate of about one $minute^{-1}$ or greater is even more preferred.

The polyarylene ester component of the present invention can be produced by a convenient method such as by melt condensation or solvent condensation of mixtures of aromatic dicarboxylic acids and diphenol diesters selected to provide polyarylene esters of the desired fire safety performance and processability. They can be produced by melt or solution polymerization of selected mixtures of phenol esters of aromatic dicarboxylic acids and diphenols and by interfacial polymerization of salts of diphenols and aromatic dicarboxylic acid dihalides. Thus, while the combination is formally a condensate of diacid and diphenol, in practice the reactants are diacids and diphenol esters, or phenyl esters of diacids and diphenols, or salts of diphenols and diacid halides. One method of preparation is the melt condensation of mixtures of aromatic dicarboxylic acids and diphenol diesters. Another method is the melt condensation of mixtures of aromatic dicarboxylic acids and diphenol diesters to a prepolymer stage of inherent viscosity in the range of 0.1 to 0.4 followed by solid state polymerization to advance the polymer to an inherent viscosity above 0.5.

The molding resins of the present invention are prepared by intimately blending the polyarylene ester with sufficient reinforcing filler which is preferably from 2 to 60 weight percent of the total composition. Preferably, the amount of reinforcing filler is in the range of from 5 to 40 weight percent of the total composition to achieve a sufficient degree of reinforcement without an excessive increase in melt viscosity. It is to be understood that the indicia of reinforcement are increases in the tensile strength, stiffness or impact strength of the filled composition in comparison with the unfilled composition.

In general, any reinforcement can be used such as granular, plate-like, acicular or fibrous fillers of suitable size for reinforcement. The fillers may be metallic such as aluminum, iron, nickel, copper or zinc or may be non-metallic such as carbon filaments, silicates, clays, calcined clays, asbestos, silica, titanium dioxide, titanate whiskers, glass flakes and fibers.

The preferred reinforcing fillers include any kind of glass fibers usually used for reinforcing thermoplastic resins and are relatively soda free glasses comprising lime-aluminum borosilicate glass such as types " C " and " E " glass. The fibers may be in the form of filaments, or bundled into strands, ropes or rovings. They are conveniently used in the form of chopped strands of up to 5 cm in length and preferably in the range of 0.3 cm to 2.5 cm in length. Other additives such as colorants, plasticizers, stabilizers and hardeners can be incorporated into the molding resins.

Blending of the polyarylene ester and the reinforcing filler is carried out in any convenient way, such as by dry mixing pellets or powder of polyarylene ester with the filler and melt blending and extrusion, or by adding filler to molten polyarylene ester, blending and extrusion. The polyarylene ester, the reinforcing filler and any other additives are preferably as free as possible of water. Mixing is preferably carried out in as short a time as possible to provide a sufficiently intimate and uniform blend and at a temperature

selected for adequate melt viscosity but insufficient to cause thermal degradation of the resin. The blend can be extruded and cut up into molding compounds such as granules and pellets by conventional techniques.

The molding resins can be molded in any equipment conveniently used for reinforced thermoplastic compositions e.g., a 14 gm. Arburg machine with temperature in the range of 250° to 350 °C and mold temperature of 100° to 150 °C can be used. Depending on the molding properties of the polyarylene ester, the amount of reinforcing filler and the crystallization behavior of the polyarylene ester, those skilled in the art will be able to make the conventional adjustments in molding cycles to accommodate the composition.

The invention is further illustrated but is not intended to be limited by the following examples in which ratios of monomers are mol ratios and all other parts and percentages are by weight unless specified otherwise.

## Example A

### Poly(1,2-bis(4-hydroxyphenyl) ethane) isophthalate

A charge consisting of 8.2 parts of isophthalic acid and 14.8 parts of 1,2-bis(4-acetoxyphenyl) ethane is placed in a reaction vessel equipped with a stirrer, condenser and receiver. The vessel is evacuated and purged with nitrogen three times. A nitrogen blanket is maintained in the reactor while it is heated to 250 °C, for about three hours during which period approximately 3.5 to 4.0 parts of acetic acid distills. Thereupon the vessel is evacuated to a pressure of 125 mm and heating at 275 °C is continued for one half hour during which period an additional 1 to 1.5 parts of acetic acid distills. The vacuum is then increased to reduce the pressure to about 0.1 to 0.2 mm and the temperature is raised to 290 °C for an additional hour. At this point the reaction mixture becomes so viscous that further stirring is difficult. Heating is stopped, the reaction mixture is again blanketed with nitrogen and allowed to cool. The resultant polymer is light yellow in color, crystalline and demonstrates an inherent viscosity of 0.57 in the phenol-tetrachloroethane solvent.

## Example B

### Poly(1,2-bis(4-hydroxyphenyl) ethane) isophthalate

A similar reaction is carried out under the same conditions and with the reactants and equipment described in Example A except that after the initial three hour period the temperature is raised to 275 'C and the pressure is reduced to 125 mm for 30 minutes. Thereafter, the temperature is raised to 290 °C during the final period at high vacuum of 0.1 to 0.2 mm. The resultant polymer demonstrates an inherent viscosity of 0.83 and is crystalline and a clear light yellow in color.

## Examples C - U

Examples C to U are carried out by reacting mixtures of diphenol diacetates and isophthalic acid by the melt method of Example A, with adjustment in the temperature and heating cycle appropriate for the rheology and morphology of the particular polyester or by melt polymerization to a prepolymer followed by solid state polymerization of the crystalline polyester. Compositions and physical property data are set forth in Table 1. Melt viscosities are determined at 316 °C with a Sieglaff-McKelvey Rheometer at a shear rate of 100 $sec^{-1}$, using a capillary with a length to diameter ratio of 25 to 1.

The data show that polyester combinations containing high levels of 1,2-bis(hydroxyphenyl) ethane and acids such as isophthalic acid are opaque and exhibit crystalline melting points below 300 °C and crystallize rapidly while in contrast, polyester combinations containing substantial amounts of other diphenols and polyester combinations containing substantial amounts of substituted acids such as 5-t-butyl-isophthalic acid are amorphous.

Fire safety performance is conveniently determined by the Underwriter's Laboratory " Test for Flammability of Plastic Materials - UL-94, September 17, 1973 " using the ratings which became effective February 1, 1974. The polyesters of 1,2-bis-(4-hydroxyphenyl) ethane are found to be superior in their UL-94 rating to polyesters containing a substantial amount of bisphenol A(2,2-bis(4-hydroxyphenyl) propane.

TABLE 1

Polyarylene esters of 1,2-bis(4-hydroxyphényl) éthane

| Example | Composition: Diphenol Mol Ratio | Composition: Diacid Mol Ratio | Appearance | Inherent Viscosity | Tg °C | Tm °C. | Rate of Crys. Min $^{1}$ | Melt Viscosity | UL-94 Rating Thickness 0.79 mm |
|---|---|---|---|---|---|---|---|---|---|
| C | 100 BHPE | 100 I | Opaque | 0.96 | 140 | — | — | — | V-0 to V-1 |
| D | 100 BHPE | 100 I | Opaque | 0.94 | — | — | — | $1.8 \times 10^4$ | — |
| E | 100 BHPE | 100 I | Opaque | 0.62 | — | — | — | $1.8 \times 10^3$ | — |
| F | 100 BHPE | 100 I | Opaque | 0.5 | — | — | — | — | V-1 |
| G | 100 BHPE | 100 I | Opaque | 1.01 | 154 | 289 | — | — | — |
| H | 100 BHPE | 97 I, 3 A | Opaque | 0.72 | — | — | — | — | V-0 to V-1 |
| I | 100 BHPE | 90 I, 10 T | Opaque | 0.88 | 154 | 255 | 0.72 | — | — |
| J | 100 BHPE | 93 I, 7 N | Opaque | 0.86 | — | — | 0.99 | — | — |
| K | 100 BHPE | 90 I, 10 O | Opaque | 0.93 | — | — | 2.56 | — | — |
| L | 100 BHPE | 67 I, 33 N | Opaque | — | — | — | — | — | — |
| M | 100 BHPE | 85 I, 15 BI | Opaque | 0.86 | 150 | — | — | — | V-0 |
| N | 100 BHPE | 80 I, 20 BI | Opaque | 0.77 | 150 | 262 | — | — | V-0 |
| O | 100 BHPE | 75 I, 25 BI | Transparent, amorphous | 1.02 | — | — | — | — | V-0 |
| P | 100 BHPE | 75 I, 25 BI | Transparent, amorphous, heat crys-tallizable | 0.82 | 150 | 257 | — | — | — |

TABLE 1 (Continued)

Polyarylene esters of 1,2-bis(4-hydroxyphenyl) ethane

| Example | Composition: Diphenol Mol Ratio | Composition: Diacid Mol Ratio | Appearance | Inherent Viscosity | Tg °C | Tm °C | Rate of Crys. $Min^{-1}$ | Melt Viscosity | UL-94 Rating Thickness 0.79 m |
|---|---|---|---|---|---|---|---|---|---|
| Q | 90 BHPE, 10 BHPS | 100 I | Opaque | 1.10 | — | — | 2.11 | — | — |
| R | 90 BHPE, 10 BPA | 100 I | Opaque | 0.94 | — | — | — | $1.15 \times 10^4$ | V-0 to V-1 |
| S | 75 BHPE, 25 BPA | 100 I | Transparent, amorphous | 0.53 | — | — | — | $2.3 \times 10^4$ | V-1 |
| T | 50 BHPE, 50 BPA | 100 I | Transparent, amorphous | 0.50 | — | — | — | $9.5 \times 10^2$ | Fails |
| U | 100 BPA | 100 I | Transparent, amorphous | 0.62 | 180 | None | 0 | — | Fails |

BHPE — 1,2-bis(4-hydroxyphenyl) ethane
BPA — 2,2-bis(4-hydroxyphenyl) propane (bisphenol A)
BHPS — bis(4-hydroxyphenyl) sulfide
A — Azelaic acid
I — isophthalic acid
T — terephthalic acid
N — 2,6-naphthalene dicarboxylic acid
O — oxydibenzoic acid, [bis(4-carboxyphenyl) ether]
BI — 5-t-butyl-isophthalic acid

## Preparation of molding resins

### Example 1

Polyisophthalate of 1,2-bis(4-hydroxyphenyl) ethane prepared as in Example C, is extruded and chopped to yield pellets of approximately 3 to 5 mm in length and 2 mm in diameter. 85 parts by weight of the pellets are blended in a tumble blender with 15 parts by weight of chopped glass strand, 4.8 mm length, containing 800 filaments of 13 micron diameter per strand supplied by Owens Corning Fiberglas Corporation under the trade name Owens-Corning Fiberglas 419. The blend of polyester and glass fiber is force fed to the chopper of a single stage extruder heated to 320 °C and is slowly extruded through the strand die. The strand is cooled and chopped to provide pellets of molding resin.

The molding resin is injection molded in a 14 gm. Arburg machine at a temperature of 315 °C and a mold temperature of 122 °C to provide test bars. The test bars are tested for tensile strength and elongation, ASTM D-638 ; flexural strength and modulus, ASTM D-790 ; impact strength ASTM D-256 ; heat distortion ASTM D-648. The data are presented in Table 2.

### Examples 2, 3 (a) and 3 (b)

Molding resins are prepared as in Example 1 with the polyisophthalate of 1,2-bis(4-hydroxyphenyl) ethane and respectively 22.5 and 30 parts by weight of glass fiber per 100 parts by weight of total composition. The molding resins are injection molded into test bars and subjected to physical testing. The data are presented in Table 2.

TABLE 2

Physical properties of articles molded from the polyisophthalate of 1,2-bis(4-hydroxyphenyl) ethane

| | Examples | | | |
|---|---|---|---|---|
| | 1 | 2 | 3 (a) | 3 (b) |
| Wt. % Glass Fiber | 15 | 22.5 | 30 | none |
| Tensile Strength, $kg \cdot cm^{-2} \times 10^{-2}$ | 10.5 | 12 | 12.7 | 6.3 |
| Elongation % | 4.4 | 3.1 | 1.8 | 18 |
| Modulus $kg \cdot cm^{-2} \times 10^{-4}$ | 5.3 | 7.0 | 8.4 | 2.3 |
| Izod (64 cm × 1.3 cm × 0.64 cm) kg . m | 0.18 | 0.24 | 0.26 | 0.25 |
| HDTUL, °C. (16.4 cm × 1.3 cm × 0.64 cm ; 18.6 $kg \cdot cm^{-2}$) | 158 | 183 | 204 | 137 |

Example 2 is subjected to the Underwriter's UL-94 test. The rating for samples 1.58 mm in thickness is V-O (average flame out time within 5 seconds, no afterglow). In comparison, the polyester of Example 2 without glass fiber reinforcement (in Example 3 (b)) is rated V-O (average flame out time within 3 seconds with afterglow which causes within 30 seconds). A test bar of Example 2 with a heat distortion temperature of 183 °C was subjected to a load in the range of 0.14 to 0.28 kg $cm^{-2}$ for 20 minutes at 210 °C. No flow or deformation occurs. In contrast, a test bar of a reinforced polytetramethylene terephthalate, containing 30 weight percent glass fiber, having a heat distortion temperature of 212 °C, shows considerable flow and deformation under similar conditions and fails the UL-94 test.

### Examples 4 - 9

Molding resins are prepared as in Example 1 by blending polyarylene ester Examples K, L, M, N, P and R with 30 weight percent of the total composition of Owens-Corning Fiberglas 419. The molding resins are molded into test bars. Considerable enhancement of the tensile strength, modulus and heat distortion temperature is obtained in comparison with the unfilled polyesters.

### Examples 10 - 13

These examples are prepared for comparative purposes. A polyarylene ester similar to Example U comprising the condensation product of bisphenol A and isophthalic acid, of inherent viscosity 0.8 is

blended with glass fiber in the manner described in Example 1. The molding resins thus obtained are molded into test bars and tested for physical properties. Examples 10, 11 and 12 contain 15, 22.5 and 30 weight percent of glass fiber; Example 13 is the unreinforced polyester. The data are presented in Table 3 and show that the heat distortion temperature of this polyester is relatively unaffected by the reinforcing filler in contrast to the pronounced effect obtained in Exemples 1-3 (a) comprising the polyisophthalate of 1,2-bis(4-hydroxyphenyl) ethane.

TABLE 3

Physical properties of articles molded from the polyisophthalate of 2,2-bis(4-hydroxyphenyl) propane

| | Examples | | | |
|---|---|---|---|---|
| | 10 | 11 | 12 | 13 |
| Wt. % Glass Fiber | 15 | 22.5 | 30 | none |
| Tensile Strength kg . $cm^{-2} \times 10^{-2}$ | 9.3 | 33.2 | 12.5 | 7.7 |
| Elongation % | 5.6 | 3.9 | 3.8 | 4.0 |
| Modulus kg . $cm^{-2} \times 10^{-4}$ | 4.0 | 5.8 | 6.7 | 2.24 |
| HDTUL, °C. 18.6 kg . $cm^{-2}$ | 175 | 173 | 177 | 160 |

Examples 14 and 15

Molding resins containing 30 weight percent glass fiber are prepared in the manner of Example 1 from polyester Examples S and T. The molding resins are molded into test bars. The tensile strength and modulus of the polyesters are enhanced by the addition of glass fiber. However, little improvement in heat distortion temperature is obtained.

**Claims**

1. A molding resin comprising an intimate blend of a polyarylene ester and a reinforcing filler characterised in that the polyarylene ester consists essentially of units derived from a $C_8$ to $C_{25}$ aromatic dicarboxylic acid and optionally a minor quantity of a $C_2$ to $C_{20}$ aliphatic dicarboxylic acid and a diphenol comprising from 60 to 100 mol percent 1,2-bis-(4-hydroxyphenyl) ethane and from 40 to 0 mol percent of a $C_6$ to $C_{25}$ diphenol, the inherent viscosity of said polyarylene ester at 30 °C being at least 0.5 as determined at a concentration of 0.5 grams polyester per 100 ml solution in a solvent mixture of 60 parts by weight of phenol and 40 parts by weight of sym-tetrachloroethane.

2. A crystalline molding resin according to Claim 1 in which the melt viscosity of said polyarylene ester at 350 °C is less than $10^5$ poises determined at a shear rate of 100 $sec^{-1}$ with a capillary rheometer.

3. A molding resin according to either of Claims 1 or 2 in which said reinforcing filler is a granular, plate-like, acicular or fibrous filler and comprises from 2 to 60 weight percent of the molding resin.

4. A molding resin according to any of the preceding claims in which said reinforcing filler is a fibrous non-metallic filler.

5. A molding resin according to any of Claims 1 to 3 in which said reinforcing filler is glass fiber.

6. A molding resin according to any of the preceding claims in which said aromatic dicarboxylic acid comprises isophthalic acid, terephthalic acid, 5-t-butyl-isophthalic acid, 3,3'-, 3,4'- or 4,4'-bibenzoic acid or a bis-(carboxyphenyl) ether, bis(carboxyphenyl) sulfide, bis(carboxyphenyl) sulfone, bis(carboxyphenyl) methane, 1,2-bis(carboxyphenyl) ethane, or a 2,2-bis(4-carboxyphenyl) propane, wherein the carboxy groups are in the 3 or 4 positions.

7. A molding resin according to any of the preceding claims in which said $C_6$ to $C_{25}$ diphenol comprises resorcinol, hydroquinone, a 3,3'-, 3,4'- or 4,4'-diphenol or a diphenol represented by the formula

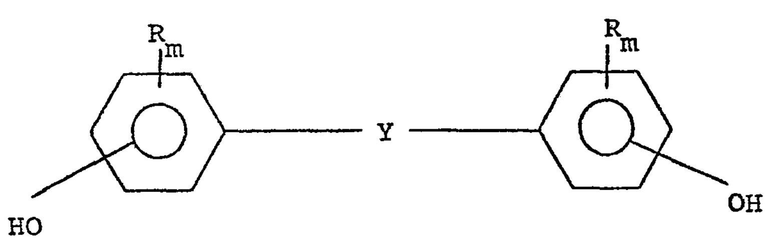

where the hydroxyl groups are in the 3 or 4 positions, Y is O, S, $SO_2$, C = O, $CH_2$, $CH(CH_3)$, $C(CH_3)_2$, $(CH_2)_2$ or $(CH_2)_3$, and R is a $C_1$ to $C_4$ alkyl radical and m = 0 to 4.

8. A molding resin according to any of the preceding claims in which said $C_6$ to $C_{25}$ diphenol comprises bis(4-hydroxyphenyl) methane, 1,2-bis(3-hydroxyphenyl) ethane, 1-(3-hydroxyphenyl)-2-(4-hydroxyphenyl) ethane, 2,2-bis(4-hydroxyphenyl) propane, bis(4-hydroxyphenyl) ether, bis(4-hydroxyphenyl) sulfide and bis(4-hydroxyphenyl) sulfone.

9. A molding resin according to any of the preceding claims in which said polyarylene ester has a crystallization rate of at least 0.2 $min^{-1}$.

10. A crystalline molding resin according to Claim 1 comprising from 2 to 60 weight percent of the total composition of the reinforcing filler and said polyarylene ester consisting essentially of recurring units represented by the formula

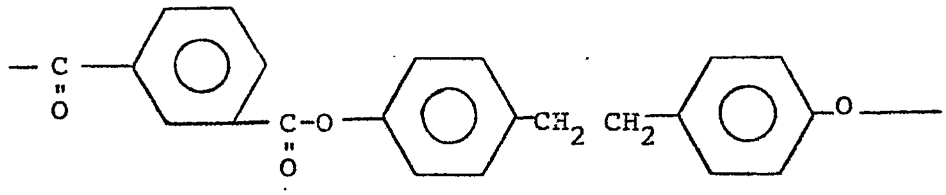

and having an inherent viscosity at 30 °C of at least 0.5 as determined at a concentration of 0.5 grams polyester per 100 ml solution in a solvent mixture of 60 parts by weight of phenol and 40 parts by weight of sym-tetrachloroethane.

11. A molding resin according to Claim 10 in which said reinforcing filler is a granular, plate-like, acicular of fibrous filler.

12. A process of producing a molding resin according to Claim 1 comprising the intimate blending of the polyarylene ester with the reinforcing filler.

13. A shaped resin article molded from a molding resin according to Claim 1.

**Ansprüche**

1. Preßharz, enthaltend eine innige Mischung aus einem Polyarylenester und einem verstärkenden Füllstoff, dadurch gekennzeichnet, daß der Polyarylenester im wesentlichen aus Einheiten besteht, die sich von einer aromatischen Dicarbonsäure mit 8 bis 25 Kohlenstoffatomen ableiten, und gegebenenfalls einer kleineren Menge einer aliphatischen Dicarbonsäure mit 2 bis 20 Kohlenstoffatomen und einem Diphenol, enthaltend von 60 bis 100 Molprozent 1,2-Bis(4-hydroxyphenyl)-äthan und von 40 bis 0 Molprozent eines Diphenols mit 6 bis 25 Kohlenstoffatomen, wobei die inhärente Viskosität des Polyarylenesters bei 30 °C, bestimmt bei einer Konzentration von 0,5 g Polyester pro 100 ml Lösung in einem Lösungsmittelgemisch aus 60 Gewichtsteilen Phenol und 40 Gewichtsteilen sym-Tetrachloräthan, zumindest 0,5 beträgt.

2. Kristallines Preßharz nach Anspruch 1, in welchem die Schmelzviskosität des Polyarylenesters bei 350 °C, bestimmt bei einer Scherrate von 100 $s^{-1}$ mit einem Kapillarrheometer, kleiner als $10^5$ Poise ist.

3. Preßharz nach einem der Ansprüche 1 oder 2, in welchem der verstärkende Füllstoff ein körniger, plattenähnlicher, nadelförmiger oder faseriger Füllstoff ist und von 2 bis 60 Gewichtsprozent des Preßharzes ausmacht.

4. Preßharz nach einem der vorstehenden Ansprüche, in welchem der verstärkende Füllstoff ein faseriger, nichtmetallischer Füllstoff ist.

5. Preßharz nach einem der Ansprüche 1 bis 3, in welchem der verstärkende Füllstoff Glasfasern sind.

6. Preßharz nach einem der vorstehenden Ansprüche, in welchem die aromatische Dicarbonsäure Isophthalsäure, Terephthalsäure, 5-tert.-Butyl-isophthalsäure, 3,3'-, 3,4'- oder 4,4'-Bibenzoesäure oder einen Bis(carboxyphenyl)-äther, ein Bis(carboxyphenyl)-sulfid, ein Bis(carboxyphenyl)-sulfon, Bis(carboxyphenyl)-methan, 1,2-Bis(carboxyphenyl)-äthan, oder ein 2,2-Bis(4-carboxyphenyl)-propan, worin die Carboxygruppen in der 3- oder 4-Stellung stehen, umfaßt.

7. Preßharz nach einem der vorstehenden Ansprüche, in welchem das Diphenol mit 6 bis 25 Kohlenstoffatomen Resorcin, Hydrochinon, ein 3,3'-, 3,4'- oder 4,4'-Diphenol oder ein Diphenol der nachfolgenden allgemeinen Formel

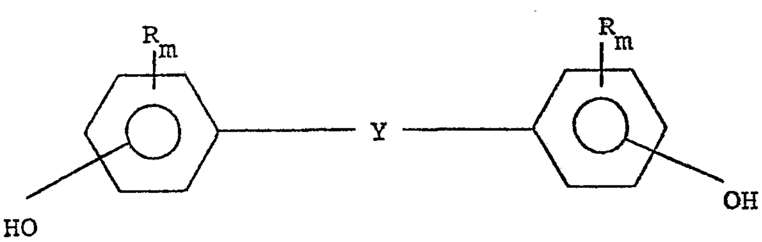

umfaßt, in welcher die Hydroxylgruppen in den 3- oder 4-Stellungen stehen, Y die Bedeutung O, S, $SO_2$, C = O, $CH_2$, $CH(CH_3)$, $C(CH_3)_2$, $(CH_2)_2$ oder $(CH_2)_3$ hat, und R einen Alkylrest mit 1 bis 4 Kohlenstoffatomen bedeutet und der Index m = 0 bis 4 ist.

8. Preßharz nach einem der vorstehenden Ansprüche, in welchem das Diphenol mit 6 bis 25 Kohlenstoffatomen Bis(4-hydroxyphenyl)-methan, 1,2-Bis(3-hydroxyphenyl)-äthan, 1-(3-hydroxyphenyl)-2-(4-hydroxyphenyl)-äthan, 2,2-Bis(4-hydroxyphenyl)-propan, Bis(4-hydroxyphenyl)-äther, Bis(4-hydroxyphenyl)-sulfid und Bis(4-hydroxyphenyl)-sulfon umfaßt.

9. Preßharz nach einem der vorstehenden Ansprüche, in welchem der Polyarylenester eine Kristallisationsgeschwindigkeit von zumindest 0,2 $min^{-1}$ besitzt.

10. Kristallines Preßharz nach Anspruch 1, enthaltend von 2 bis 60 Gewichtsprozent der gesamten Zubereitung an verstärkendem Füllstoff, und worin der Polyarylenester im wesentlichen aus wiederkehrenden Einheiten der nachfolgenden allgemeinen Formel

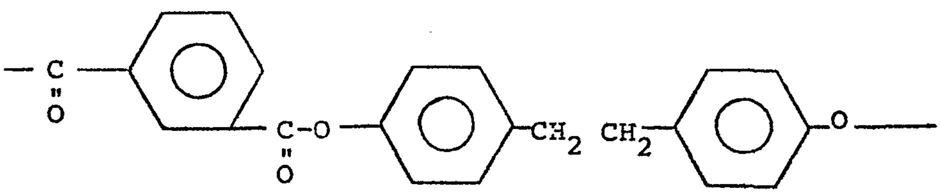

besteht und eine inhärente Viskosität bei 30 °C, wie sie bei einer Konzentration von 0,5 g Polyester pro 100 ml Lösung in einem Lösungsmittelgemisch aus 60 Gewichtsteilen Phenol und 40 Gewichtsteilen sym-Tetrachloräthan bestimmt wird, von zumindest 0,5 besitzt.

11. Preßharz nach Anspruch 10, in welchem der verstärkende Füllstoff ein körniger, plattenähnlicher, nadelförmiger oder faseriger Füllstoff ist.

12. Verfahren zur Herstellung eines Preßharzes nach Anspruch 1, dadurch gekennzeichnet, daß es das innige Mischen des Polyarylenesters mit dem verstärkenden Füllstoff umfaßt.

13. Geformter Harzartikel, gepreßt aus einem Preßharz gemäß Anspruch 1.

**Revendications**

1. Résine de moulage comprenant un mélange intime d'un ester de polyarylène et d'un produit de charge de renforcement, caractérisée en ce que l'ester de polyarylène se compose essentiellement d'unités provenant d'un acide dicarboxylique aromatique en $C_8$ à $C_{25}$, et, de manière facultative, d'une quantité peu importante d'un acide dicarboxylique aliphatique en $C_2$ à $C_{20}$, et d'un diphénol comprenant 60 à 100 % en mole de 1,2-bis(4-hydroxyphényl) éthane et de 40 à 0 % en mole d'un diphénol en $C_6$ à $C_{25}$, la viscosité inhérente de cet ester de polyarylène à 30 °C étant au moins 0,5, telle que déterminée à une concentration de 0,5 gramme de polyester pour 100 ml de solution dans un mélange de solvants se composant de 60 parties en poids de phénol et de 40 parties en poids de tétrachloroéthane symétrique.

2. Résine de moulage cristalline selon la revendication 1, caractérisée en ce que la viscosité de masse fondue de l'ester de polyarylène à 350 °C est inférieure à $10^5$ poises, déterminée pour un taux de cisaillement de 100 $s^{-1}$ avec un rhéomètre capillaire.

3. Résine de moulage selon la revendication 1 ou la revendication 2, caractérisée en ce que le produit de charge de renforcement est un produit de charge granulaire, du genre plaque, aciculaire ou fibreux et forme 2 à 60 % en poids de la résine de moulage.

4. Résine de moulage selon l'une quelconque des revendications 1 à 3, caractérisée en ce que le produit de charge de renforcement est un produit de charge non métallique fibreux.

5. Résine de moulage selon l'une quelconque des revendications 1 à 3, caractérisée en ce que le produit de charge de renforcement est constitué de fibres de verre.

6. Résine de moulage selon l'une quelconque des revendications 1 à 5, caractérisée en ce que l'acide dicarboxylique aromatique comprend l'acide isophtalique, l'acide téréphtalique, l'acide 5-t-butylisophtalique, l'acide 3,3'-, 3,4'- ou 4,4'-bibenzoïque ou un éther de bis(carboxyphényle), un sulfure de bis(carboxyphényle), la bis(carboxyphényl) sulfone, le bis(carboxyphényl) méthane, le 1,2-bis(carboxyphényl) éthane ou un 2,2-bis(4-carboxyphényl) propane, où les groupes carboxy sont dans la position 3 ou 4.

7. Résine de moulage selon l'une quelconque des revendications 1 à 6, caractérisée en ce que le diphénol en $C_6$ à $C_{25}$ comprend du résorcinol, de l'hydroquinone, un 3,3'-, 3,4'- ou 4,4'-diphénol ou un diphénol représenté par la formule :

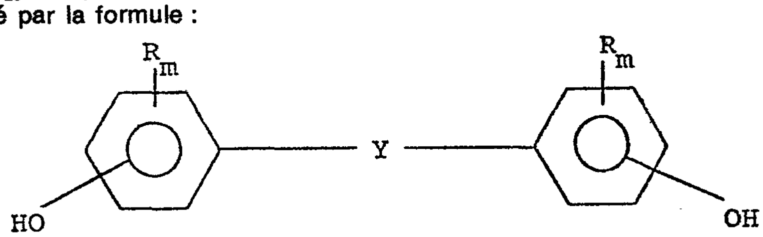

où les groupes hydroxyles sont dans la position 3 ou 4 Y est O, S, $SO_2$, C = O, $CH_2$, $CH(CH_3)$, $C(CH_3)_2$, $(CH_2)_2$ ou $(CH_2)_3$, R est radical alkyle en $C_1$ à $C_4$ et m vaut 0 à 4.

8. Résine de moulage selon l'une quelconque des revendications 1 à 7, caractérisée en ce que le diphénol en $C_6$ à $C_{25}$ comprend le bis(4-hydroxyphényl) méthane, le 1,2-bis(3-hydroxyphényl) éthane, le 1-(3-hydroxyphényl)-2-(4-hydroxyphényl) éthane, le 2,2-bis(4-hydroxyphényl) propane, l'éther de bis(4-hydroxyphényle), le sulfure de bis(4-hydroxyphényle) et la bis(4-hydroxyphényl) sulfone.

9. Résine de moulage selon l'une quelconque des revendications 1 à 8, caractérisée en ce que l'ester de polyarylène a une vitesse de cristallisation d'au moins 0,2 $mn^{-1}$.

10. Résine de moulage cristalline selon la revendication 1, caractérisée en ce qu'elle comprend 2 à 60 % en poids, par rapport à la composition totale, du produit de charge de renforcement et en ce que l'ester de polyarylène se compose essentiellement de motifs représentés par la formule :

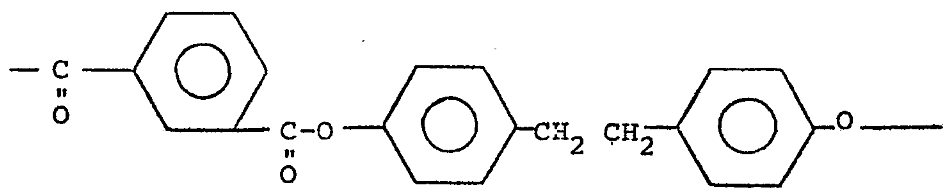

et ayant une viscosité inhérente, à 30 °C, d'au moins 0,5, telle que déterminée à une concentration de 0,5 gramme de polyester pour 100 ml de solution dans un mélange de solvants se composant de 60 parties en poids de phénol et de 40 parties en poids de tétrachloroéthane symétrique.

11. Résine de moulage selon la revendication 10, caractérisée en ce que le produit de charge de renforcement est un produit de charge granulaire, du genre plaque, aciculaire ou fibreux.

12. Procédé de production d'une résine de moulage indiquée dans la revendication 1, caractérisé en ce qu'il comprend le mélange intime de l'ester de polyarylène avec le produit de charge de renforcement.

13. A titre de produit industriel nouveau, article ou produit industriel en résine conformé, moulé à partir d'une résine de moulage selon la revendication 1.